(19) Europäisches Patentamt
European Patent Office
Office européen des brevets

(11) **EP 3 324 745 B1**

(12) **EUROPEAN PATENT SPECIFICATION**

(45) Date of publication and mention
of the grant of the patent:
**16.09.2020 Bulletin 2020/38**

(51) Int Cl.:
***A21D 13/00*** *(2017.01)*     ***A21D 2/18*** *(2006.01)*

(21) Application number: **16744632.7**

(22) Date of filing: **15.07.2016**

(86) International application number:
**PCT/US2016/042438**

(87) International publication number:
**WO 2017/015092 (26.01.2017 Gazette 2017/04)**

(54) **SUSTAINED ENERGY BAKE STABLE FILLERS AND BAKED PRODUCTS COMPRISING THESE**

BACKSTABILE FÜLLUNGEN ZUR LANG ANHALTENDEN ENERGIEFREISETZUNG, SOWIE DAMIT HERGESTELLTE BACKWAREN

PRODUITS DE FOURRAGE STABLES A LA CUISSON A LIBERATION PROLONGEE D'ENERGIE, ET PRODUITS DE BOULANGERIE LES COMPRENANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.07.2015 US 201562193665 P**

(43) Date of publication of application:
**30.05.2018 Bulletin 2018/22**

(73) Proprietor: **Intercontinental Great Brands LLC**
**East Hanover, NJ 07936 (US)**

(72) Inventors:
 • **BEAVER, Michelle D.**
   **East Hanover, New Jersey 07936 (US)**
 • **HAYNES, Lynn C.**
   **East Hanover, New Jersey 07936 (US)**
 • **CLEMENT, Jerome**
   **91400 Saclay (FR)**

(74) Representative: **Boult Wade Tennant LLP**
**Salisbury Square House**
**8 Salisbury Square**
**London EC4Y 8AP (GB)**

(56) References cited:
**WO-A1-01/50869**     **US-A1- 2002 155 198**
**US-A1- 2009 269 446**     **US-A1- 2010 178 388**
**US-A1- 2011 117 265**     **US-A1- 2014 220 186**

**Description**

FIELD

The field relates to fruit-based fillings for use in dough, batter, and the like to form baked products and methods of preparing thereof, and in particular, methods and compositions of such fruit-based fillings that retain high levels of slowly digestible starches.

BACKGROUND

A rapid digestion of starch to glucose can lead to high levels of glucose in the blood followed by a rapid drop in blood glucose levels. In some instances, prolonged and elevated high blood glucose levels are undesired. A constant and moderate blood glucose level can be more preferred, which contributes to a sustained and stable energy source.

Prior food products have recognized slowly digestible starches that are capable of providing a sustained energy source, but none have achieved high levels of the slowly digestible starches in aqueous based foods and fillings. In aqueous-based compositions, water tends to negatively affect the slowly digestible starch by swelling and hydrating the amorphous regions of the starch that tend to degrade the slowly digestible nature of the starch. Attempting to increase slowly digestible starch levels by increasing the loading of starch negatively affects the organoleptic characteristics of the food by changing the textures, flavors, and mouthfeel of the product. Thus, merely increasing starch levels is often not a favorable approach to achieving higher levels of slowly digestible starch. Attempts at increasing slowly digestible starch levels often involve treating the starches with various enzymes. Methods that require additional enzymatic processing to modify the starch are time consuming and less desired from a commercial manufacturing standpoint Moreover, such approaches generally do not retain the natural or native starch components and are often undesired by consumers due to the modification of the starch needed to maintain slowly digestible levels.

A filling composition comprising non-gelatinised starch, which may be used for bakery products, is disclosed in US 2009/0269446. A dough for producing biscuits comprising slowly available starch and the production of such biscuits in disclosed in US 2014/0220186.

SUMMARY

The invention relates to a method of preparing a baked dough product including a bake-stable filling, and to baked dough products comprising a dough component and a filling applied thereto, which are defined by the claims. The method of preparing a baked dough product including a bake-stable filling (such as, but not limited to, fruit-based fillings, savory filings like vegetable or cheese-based fillings or chocolate-based filings) for retaining high levels of slowly digestible starch (SDS) therein includes first blending a filling component (such as a fruit component, a vegetable component a cheese component, or a chocolate component), a non-gelatinized grain starch (which may be a native starch or a non-native starch), a starch plasticizer, and a starch anti-plasticizer to form an aqueous filling. The filling has about 10 to about 24 percent moisture, preferably about 12 percent to about 20 percent, and a ratio of starch anti-plasticizer to starch plasticizer from about 0.25 to about 3.00. The filling is added to a raw dough component prior to baking to form a dough-filler composition. Said dough-filler composition is baked at temperatures no greater than about 10°C below the starch gelatinisation temperature so that the grain starch remains unswelled to form a baked dough product including at least about 10 grams of slowly digestible starch per 100grams of the filling component. The starch anti-plasticizer includes a select molecular weight from about 90 to about 3600. The starch has an increased gelatinization temperature, relative to the native starch gelatinization temperature, selected form about 50°C to about 95°C and, in some approaches, defined by and between the formulas A and B

$$-0.0003\,(x)^2 + 0.2199\,(x) + 63.721 \qquad (A)$$

$$-0.0001\,(x)^2 + 0.1251\,(x) + 63.605 \qquad (B)$$

wherein (x) is the molecular weight of the starch anti-plasticizer. Such composition of starch is effective to retain high levels of the SDS in the filling after baking.

Next, the filling is combined with or added to a raw dough or batter component prior to baking to form a dough-filler composition. In prior products, significant loss of SDS can occur without gelation of the starch due to hydration and swelling of amorphous regions of granule. As much as 40 percent of SDS can be lost at temperatures 25°C below the gelatinization temperautre of starch in filler. The dough-filler composition is then baked or heated at temperatures no greater than about. 10°C, such as below 20°C below the starch gelatinization temperature so that the non-gelatinized, native or non-native grain starch remains unswollen and inaccessible to enzyme in the filling and can be used in a baked dough product including at least about 15 grams of slowly digestible starch/100 grams of fruit-based filling.

A baked dough product including a bake-stable aqueous filling that retains high levels of slowly digestible starch therein after baking is also provided. The filling may, but not limited to, fruit-based fillings, savory filings like vegetable or cheese-based fillings or chocolate-based filings. In one approach, the baked dough product includes a dough component and a filling applied to the dough component. The filling including a filling component (such as a fruit component, a vegetable component, a cheese component, or a chocolate component), a non-gelatinized grain starch (such as a native or a non-native starch), a starch plasticizer, and a starch anti-plasticizer which has a molecular weight from about 90 to about 3600. The filling has about 10 to about 25 percent moisture, preferably about 12 percent to about 20 percent, and a ratio of the starch anti-plasticizer to the starch plasticizer from about 0.25 to about 3.0. In some approaches, the filling is a low fat filling and has fat, but generally no more than about 5 percent fat. The filling comprises at least about 10 grams of slowly digestible starch par about 100 grams of filling, and said baked dough-filling composition is obtainable by baking at a temperature no greater than about 10°C below the starch gelatinization temperature so that the grain starch remains unswelled to form a baked dough product including at least about 10 grams of slowly digestible starch per 100 grams of the filling component.

The filling has an increased starch gelatinization temperature, relative to the native starch, and defined by and between the formulas A and B

$$-0.0003\,(x)^2 + 0.2199\,(x) + 63.721 \qquad (A)$$

$$-0.0001\,(x)^2 + 0.1251\,(x) + 63.605 \qquad (B)$$

wherein (x) is the molecular weight of the anti-plasticizer. Such composition of filling, even being aqueous based, retains at least about 15 grams of slowly digestible starch/100 grams of fruit based filling.

BRIEF DESCRIPTION OF THE DRAWINGS

FIG. 1 illustrates a relationship of starch antiplasticizer molecular weight, antiplasticizer concentrate expressed as an antiplasticizer /water ratio and the resultant gelatinization temperature of wheat starch in excess solution (i.e., starch solids about 50%).

FIG. 2 shows another relationship between the filler moisture and percentage of sucrose as an anti-plasticizer that may, independently or in combination with other factors herein, affect SDS retention.

FIG. 3 illustrates retention of slowly digestible starch as gelatinization temperature of the starch (influenced independently or in combination with factors identified herein) exceeds processing temperature of the filler, aiding in retention of high levels of SDS.

DETAILED DESCRIPTION

A bake-stable, aqueous filling ingredient and baked, dough based products including such filling ingredient are described herein. In some approaches, the filling ingredient is a fruit-based filling ingredient. In other approaches, the filling may be savory filings like vegetable or cheese-based fillings or, in other approaches, chocolate-based filings. The bake-stable filling ingredient is an aqueous, in some approaches, low-fat composition that retains very high levels of slowly digestible starch (SDS) after baking even though the filling includes only moderate levels of starch. Thus, the filling not only provides high levels of SDS, but also retains the organoleptic qualities of fruit-based fillings commonly used in baked dough products. Additionally, as the filling is bake stable, it can advantageously be applied to a dough product prior to baking, be baked along with the dough, and still retain very high levels of slowly digestible starch therein without significantly changing the organoleptic characteristics of the fruit-based filling.

Such high levels of SDS are achieved by controlling the swelling of the amorphous regions of the starches, reflected in elevated starch gelatinization temperature, through moisture content, filler composition, baking conditions and/or anti-plasticizing components of the filling. Select relationships between such filler characteristics are important to achieve high levels of SDS and even small deviations from the filler characteristics and, in some cases, the baking conditions discovered herein have a dramatic effect at the retention of SDS in the final, baked product. In some approaches, the fillings herein include at least about 10g of SDS/100 grams of product and, in other approaches, about 10 to about 15g of SDS/100 grams of product, and in yet other approaches, about 15 to about 25g of SDS/100 grams of product. In some cases, such levels of SDS retained are at least about 100%, and in other approaches, at least about 20% of the SDS in the native starch is retained. In yet other approaches, the fillings herein retain about 50 to about 100% SDS, and in other approaches, about 80 to about 100% SDS.

In some approaches, the fillings are low fat, aqueous-based fillings that include, among other ingredients, a fruit component, a non-gelatinized, native grain starch, a starch plasticizer, and a starch anti-plasticizer. By low fat, the fillings may include fat, but generally not more than about 5 percent fat The fat may be liquid or solid at room temperature and include canola, soy, palm and blends thereof. Other components may also be included so long as they do not negatively affect the levels of SDS. In some approaches, high levels of SDS are retained in the products through careful management of the filler moisture content, select ratios of a starch plasticizer to starch anti-plasticizer, and in some cases, management of a temperature differential between the starch gelatinization temperature, which may be increased over the starches native gelatinization temperature, and the baking temperature.

In some cases, it is desirable to increase the starch gelatinization temperature to help maximize SDS by providing a greater temperature differential over the baking temperature. In aqueous systems, increasing starch gelatinization temperature while maintaining consistent organoleptic characteristics can be challenging. In one approach, high levels of SDS are retained by increasing the starch gelatinization temperature (relative to the gelatinization temperature of the native starch) by maintaining the levels of starch plasticizer, starch anti-plasticizer, and molecular weight of the starch anti-plasticizer within a specifically defined relationship. In some cases, this relationship is a quasi-linier or a second order polynomial association between anti-plasticizer molecular weight relative to the desired starch gelatinization temperature at specific ratios of starch plasticizer to starch anti-plasticizer. For instance, it has been discovered that doubling the ratio of the anti-plasticizer to plasticizer, such as from 1 to 2, tends to increase the starch gelatinization temperature by about 10° C and doubling the molecular weight of the starch anti-plasticizer, such as increasing the molecular weight of the starch anti-plasticizer from about 150 to about 400 tends to increase the starch gelatinization temperature about 10° C to about 15° C. From such associations, a specific window of starch gelatinization temperature can be selected to maximize gels temps to help retain high levels of the SDS. These and other features will be explained in more detail throughout this disclosure.

In one approach, the filling component is a bake-stable, fruit-based, aqueous filler suitable for use as a filling ingredient added in or to batters, dough, and the like before baking to form baked goods, such as (but not limited to) a biscuit, cracker, cookie, cake, bars, cereal, and the like to retain high levels of SDS in the filling after baking. The filling component may include about 1 to about 50 percent of a fruit component, in other approaches, about 5 to about 30 percent of the fruit component, and in yet other approaches, about 10 to about 20 percent of the fruit component. The fruit component may include any fruit-based ingredient suitable for a filler effective for baked goods and may include juice, puree, powder, dried fruit, restructured fruit, concentrates, fruit fiber, fruit pomace and combinations thereof. The fruit component includes at least about 0 percent to 10 percent pectin and in other approaches, about 2 percent to about 5 percent pectin. In other approaches, the filling is a vegetable or cheese based filling and, in yet other approaches the filling is a chocolate-based filling.

In some approaches, the filler is low fat and, in some cases, may include fat, but generally not more than about 5 percent fat. In other approaches, the filler may include about 0 percent to about 2 percent fat. Within the filling, the fat may be provided by the grain, or seed, and combinations thereof and the fat may be canola, soy, palm, sunflower, cottonseed, cocoa butter, etc.

The filling component also includes a non-gelatinized grain starch that is intended to remain as a non-gelatinized grain starch in the final product. This starch may be a native grain starch or a non-native grain starch. The starch is carefully selected and controlled to maintain high levels of SDS in the finished filling. For instance, the starches herein retain their native starch crystal form and the amorphous regions of the starch (approximately 80 to 90% of the starch granule is amorphous, measured via X-ray crystallography, where the percentage of the amorphous region is based on the ratio of non-crystalline area-i.e., the area between peak baseline and linear baseline-to the total diffraction area) remain unswelled and non-gelatinized even in an aqueous system. In one approach, the filling component includes about 10 percent to about 50 percent of the starch, in other approaches, about 20 percent to about 40 percent of the starch, and in yet other approaches, about 30 percent to about 40 percent of the starch. The starch may be selected from wheat, corn, rice, tapioca, potato, oat, buckwheat, rye, barley, sorghum, millet, flour, teff, and combinations thereof. Examples of suitable starches include, but are not limited to, native wheat starch, high amylose starch, and resistant wheat starches. High amylose starches are as result of inhibiting two isoforms of starch branching enzyme to below 1% of the wild-type activities. Starch granule morphology and composition were noticeably altered. Normal, high-molecular-weight amylopectin was absent, whereas the amylose content is increased to levels approaching 80% wt/wt starch and may have about 25 percent to about 80 percent amylose content. High-amylose starch, as a result of its naturally high gelatinization temperature and delayed swelling during food processing, has been found to contribute to a small but significant reduction in the overall postprandial plasma insulin when consumed. Resistant starches are that portion of native starch or physically treated starches that resist enzymatic digestion under conditions that would normally digest starch. Some resistance starch may become slowly digestible under certain food processing conditions, available to provide a sustained source of energy, and some may remain resistance to digestion.

The filling component also includes a starch plasticizer. In some cases, the filling may include about 10 to about 25 percent of the starch plasticizer, in other cases, about 12 to about 22 percent of the starch plasticizer, and in yet other cases, about 16 to about 20 percent of the starch plasticizer. A starch plasticizer as used herein means an additive that increase the plasticity or fluidity of starch. Water is a powerful plasticizer of the water compatible, semicrystalline food polymer starch. Plasticization by water depresses Tg (thermal glass transition) (see, e.g., Water in Foods, ed by P. Fito, A. Mulet and B. McKenna1994, Elsevier Science, New York p. 148, which is incorporated herein by reference) and is disadvantageous to retaining SDS of the starch. Depression of temperature at which the amorphous starch regions become rubbery and mobile allow for starch swelling at lower temperatures and access of digestive enzymes. In one approach, the starch plasticizer is added water, but it may also be added glycerin, xylitol, sorbitol, polyethylene glycol and combinations thereof. As discussed more below, water percent and relative relationships of the starch plasticizer to the starch anti-plasticizer are one helpful factor in achieving the high retentions of SDS.

In addition to the starch plasticizer, the filling component also includes a starch anti-plasticizer, which is an ingredient that, in general, counteracts the plasticizing effect of the starch plasticizer. In some approaches, the filler may include about 5 percent to about 60 percent of the starch anti-plasticizer, in other approaches, about 20 to about 50 percent of the starch anti-plasticizer, and in yet other approaches, about 35 to about 45 percent of the starch anti-plasticizer. As used herein, the starch anti-plasticizer is any ingredient that behaves as a cosolvent with water and has a higher average molecular weight than water alone and the afore mentioned "plasticizers", depresses starch Tg less than plasticizers or water, such that the gelatinization temperature in the presence of the antiplasticizer is elevated relative to the plasticizers.) (See, e.g., Water in Foods, ed by P. Fito, A. Mulet and B. McKenna1994, Elsevier Science, New York p. 162.) As discussed more below, not only is the amount of starch anti-plasticizer helpful in retention of high levels of SDS in aqueous systems, but the relationship to the starch plasticizer and selected molecular weight of the starch anti-plasticizer.

In some approaches, the starch anti-plasticizer has a molecular weight of about 180 to about 3600, in other approaches, about 300 to about 1100, and in yet other approaches, about 340 to about 500. Examples of the starch anti-plasticizer include, but is not limited to sugars such as monosaccharides like glucose (MW of 180.16), fructose (MW of 180.16) and galactose (MW of 180.16) or disaccharides like sucrose (MW of 342.3); maltose (MW of 342.2), and lactose (MW 342.2) or starch polysaccharides like polydextrose and maltodextrin. As used herein, preferred anti-plasticizers are carbohydrate based anti-plasticizers. The starch anti-plasticizer may also be polydextrose, maltodextrin, glucose syrup, corn syrup, brown sugar, molasses, fruit sugar, fruit juice, fruit paste.

While each of the filling components is separately discussed above, it will be understood that the various features of each component can be considered in combination with various features of the other components as needed for particular applications. This prior discussion (and the discussion to follow) is meant to highlight different features and aspects of the unique filling components herein and it will be appreciated that those features and aspects may be combined in any way as needed for a particular application. For example, there are several selected factors that contribute to the retention of the high levels of SDS in the filler components herein when the filler is a low fat, aqueous based system. These factors may be each independently included in the fillers or may be combined in various combinations as needed for a particular application to retain high levels of SDS. Each of these factors are discussed previously and below and this independent discussion of these factors does not mean they cannot be combined in various combinations. These factors include, but are not limited to, one or more of filler moisture content, starch gelatinization temperature, relationship of the starch plasticizer to starch anti-plasticizer, molecular weight of the starch anti-plasticizer, and/or starch gelatinization temperature relative to the native starch gelatinization temperature or baking temperature.

Moisture content of the filler is one factor that has an effect on the retention of high levels of SDS in an aqueous system. Select moisture levels are desired to retain the SDS. By one approach, the moisture content is about 10 to about 20 percent in other approaches, about 12 to about 18 percent, in yet other approaches, about 12 to about 16 percent. The filler may also have a water activity of about 0.500 to about 0.750. As moisture content increases, the level of retained SDS decreases, dramatically in some aspects. In general, there is an inverse relationship between moisture and SDS retention. The negative effects of increased moisture on SDS loss can be counteracted by including the anti-plasticizer in the specific ratios discussed herein, but there are still limits to the effects the anti-plasticizer. Above the moisture range herein, the anti-plasticizer has little to no effect at aiding SDS retention at baking temperatures.

In most cases, the level of moisture in the filler alone generally does not ensure retention of high levels of SDS, but also the correct selection of the starch anti-plasticizer relative to the moisture levels. Within the moisture ranges noted above, select levels of the starch anti-plasticizer in the ranges noted above and in a ratio of starch anti-plasticizer to starch plasticizer from about 1 to about 2 helps achieve the high levels of SDS retention within the called for moisture ranges. Above the range of the moisture, the starch anti-plasticizer, and these ratios, cannot prevent plasticization of the starch in aqueous based, low fat systems enough to retain high levels of SDS. Additionally, starch anti-plasticizer molecular weight needs to generally be within a certain range in order to act as an efficient cosolvent. In some approaches and as discussed previously, the molecular weight is 180 to about 500, and in other approaches, about 500 to about 3600.

Starch gelatinization temperature is also preferably increased from the starches' native gelatinization temperature to aid in SDS retention. In the context of the aqueous, fruit-based fillers herein, there is also a unique relationship of the starch anti-plasticizer amount, the starch anti-plasticizer molecular weight, and the starch plasticizer amount to define desired increased starch gelatinization temperatures for retention of high levels of SDS. For example, the starch gelatinization temperature may be between about 60°C and about 130°C and also defined by and between the relationships (A) and (B):

$$-0.0003 \, (x)^2 + 0.2199 \, (x) + 63.721 \qquad (A)$$

$$-0.0001 \, (x)^2 + 0.1251 \, (x) + 63.605 \qquad (B)$$

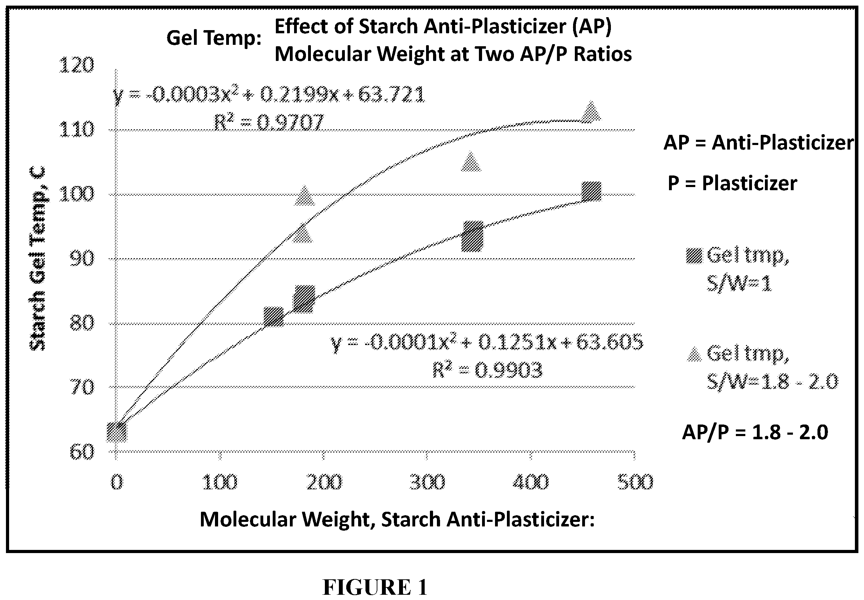

wherein (x) is the molecular weight of the anti-plasticizer. Relationship (A) is for the starch anti-plasticizer to the starch plasticizer at a ratio of about 1.8 to 2.0. Relationship (B) is for a ratio of about 1.0. This relationship is illustrated graphically in FIG. 1 and shows a window that includes the curves (A) and (B) as well as the space between these curves to define increased starch gelatinization temperatures in the context of aqueous, fruit-based fillings as a function of starch anti-plasticizer, starch plasticizer, and starch anti-plasticizer molecular weight to retain the high levels of SDS as described herein.

The crystalline melting profile of the starch was determined by standard differential scanning calorimetry. The instrument and method used to characterize the starch in the bran are:

Instrument: TA Instruments Differential Scanning Calorimeter (DSC), which includes the TA Instruments DSC Q1000 Controller software, TA Instruments Q1000 Module and the TA Instruments RCS unit.

Sample Pans: Perkin-Elmer stainless steel high pressure capsules with o-ring.

Sample preparation: The ingredients are mixed with solvent at a 1:1. solids to solvent ratio.

Approximately 35 to 50 milligrams of the moist ingredient are weighed in a DSC sample pan.

Instrument calibration: the DSC is calibrated for baseline, cell constant, temperature and heat capacity in a known manner:

Baseline calibration: using two empty sample pans the baseline slope and baseline offset are determined over a temperature range from 10°C to 150°C, with a heating rate of 5°C/min.

Cell constant calibration: indium is used as a standard.

Temperature calibration: calibrated at one point using indium.

The DSC calibration data analysis software program is used to make the proper DSC calibration corrections with the instrument in the calibration mode. Heat capacity is calibrated using sapphire, in a known manner. The sample is characterized with the DSC in the standard mode using a ramp rate of 5°C from 20°C to 140°C. To analyze the results, the total heat flow curve is integrated from baseline to measure the gelatinization temperature of the crystalline starch in the sample. Samples are run at least in duplicate.

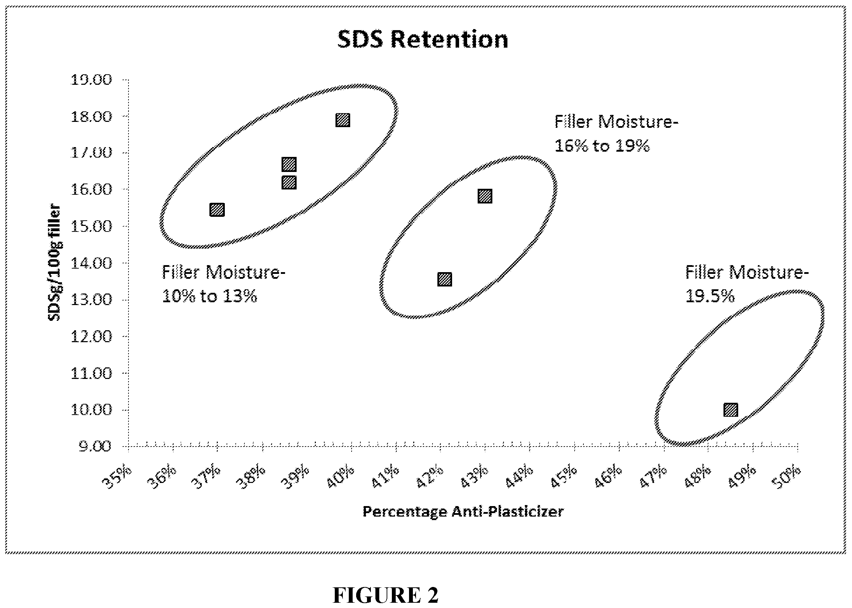

FIG. 2 shows another relationship between the filler moisture and percentage of sugar (sucrose, MW of 342) as an anti-plasticizer that may, independently or in combination with other factors herein, affect SDS retention. This graph shows that filler moisture is another factor that helps aid in retention of high levels of SDS and that there is an inverse relationship between filler moisture content and retention of SDS. For example, as filler moisture increases, then the level of SDS generally decreases. As shown in the chart, within a given moisture range, increases of the anti-plasticizer can counteract the increase in moisture and aid in the retention of SDS by 3 to 4 points. However, as suggested by this chart, there is a limit to the effect of the starch anti-plasticizer because as filler moisture is increased further, even increasing the amount of starch anti-plasticizer cannot counteract the degrading effects the plasticizer has on the retention of SDS in the context of the fillers herein.

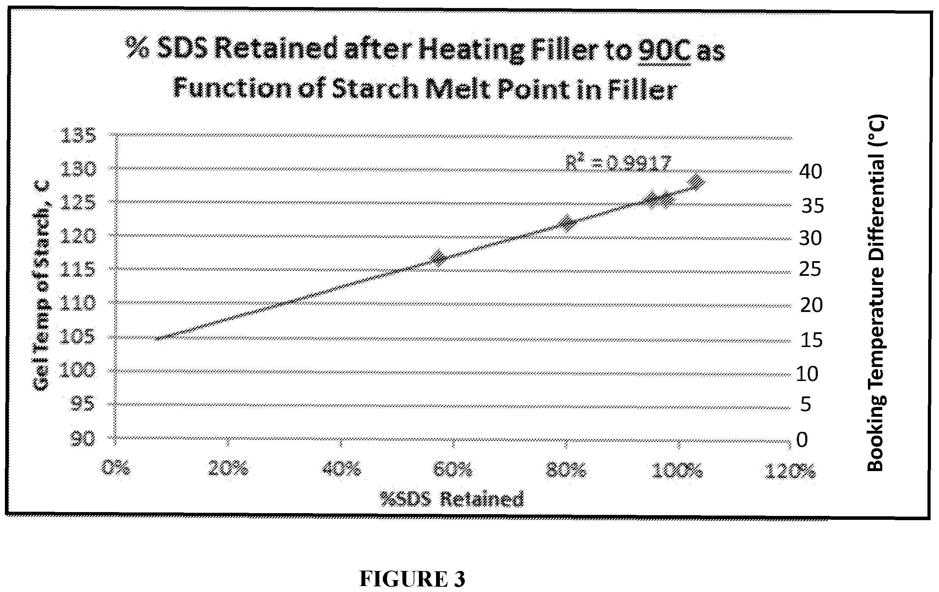

FIG. 3 illustrates yet another relationship that may, independently or in combination with the other factors identified herein, aid in retention of high levels of SDS. FIG. 3 shows the temperature differential between the starch gelatinization temperature and the baking temperature as another factor that may influence high SDS retention. In this figure, the baking temperature was 90°C, but it will be appreciated such temperature differential will generally apply at other commercial baking temperatures as well depending on the particular application. In some approaches, it is preferred that the maximum internal product temperature is about 20°C below the starch gelatinization temperature to ensure retention of high levels of SDS. In other approaches, the maximum internal product temperature is about 15°C below the starch gelatinization temperature, and in yet other approaches, maximum internal product temperature is about 10°C below the starch gelatinization temperature. As the baking temperature approaches the starch gelatinization temperature there is an appreciable drop off of SDS retention in aqueous filler compositions. Thus, to retain high levels of SDS, selection of starch gelatinization temperature (where the starch gelatinization temperature is impacted by the starch plasticizer, the starch anti-plasticizer, and the starch anti-plasticizer molecular weight) impacts baking temperatures that can be used when the filler is an aqueous based, low fat composition because a baking temperature that is too close to the gelatinization temperature decreases SDS retention. Filler moisture levels, as also discussed above, may also impact these relationships.

As used herein, slowly digestible starch, or SDS for short, generally means that portion of starch carbohydrate, measured as glucose, released between 20min and 120 min during enzyme digestion. The rate and extent of starch digestion in starch-containing foods may be estimated by an in vitro method developed by Englyst et al. (1996; 1999) (Incorporated herein by reference). Briefly, food samples are analyzed for free-sugar glucose (FSG) and fructose following in vivo chewing or mechanical mincing/crushing. Then, food samples are incubated with pancreatic enzymes (invertase, amylase, amyloglucosidase), and the amount of free glucose is measured at 20 minutes (G20) and 120 (G120) minutes. Food samples are further incubated and treated to obtain the total glucose portion. The amount of RDS is calculated as the difference between G20 and FSG multiplied by a factor of 0.9, and the amount of SDS by the difference between G120 and G20 multiplied by a factor of 0.9 and express as weight percent (g/100g of product). Resistant starch (RS) is calculated as the difference between total glucose and G120 multiplied by a factor of 0.9. The amount of SDS as discussed herein is determined by the methods discussed in Englyst KN, Englyst HN, Hudson GJ, Cole TJ, JH Cummings, "Rapidly available glucose in foods: an in vitro measurement that reflects the glycemic response," Am J Clin Nutr 1999, volume 69, pages 448-454, which is incorporated herein by referenced.

The dough portion of the products herein may be a cookie, cracker, biscuit, bread, cake, bar, cereal and combinations thereof. The dough portion may include sweeteners, fat, protein, leavening, emulsifiers, flavor, fibers and grain based ingredients such as flours, seeds, particulates. The final product may include about 40 to about 90 percent of the dough portion, in other approaches, about 40 to about 60 percent of the dough. The dough portions herein also provide high levels of SDS, such as at least about 15g of the SDS/100g and in some cases, about 15 to about 20g of the SDS/100 grams of dough.

The filler compositions herein are preferably applied to raw dough prior to the dough being baked. In some approaches, about 10 to about 60 percent of the filler is applied to or in the raw dough, in other approaches, about 40 to about 60 percent of the filler is applied to or in the raw dough, and in yet other approaches, about 40 to about 50 percent of the filler is applied to or in the raw dough. When combined with the raw dough and then baked at the same time as the dough (at the select baking conditions and with the other factors selected of the filling compositions discussed herein), the filler retains high levels of SDS so that the overall final baked product also includes high levels of SDS provided from both the filler and the dough portion. To this end, by addition of the fillers described herein, the filler portion does not dilute the level of SDS provided in the final, baked product because both the filler portion and the dough portion provide high levels of SDS.

The filler compositions herein are also bake stable meaning that the fillers do not spread excessively nor "boil-out" during baking. The bake stability is measured by the "ring test" as follows:

Bake Spread Test Method:
Use a 1.6" diameter ring by .75" in height.

Spray inside of ring with a thin film of oil for lubrication.

Fill ring with filler and then remove ring, leaving a ring of filler on a sheet of filter paper.

Bake in a common convection oven at 400°F for 10 min.

Filling diameter to be measured after baking and should be within about 2 to about 3 inches, and, in some approaches, about 2 to about 2.6 inches. However, the bake spread may vary depending on the finished product application.

The fillers herein also include additional ingredients to render them bake stable such as starch, modified starch, flours, pectin, fruit solids, sugar solids and additional hydrocolloids including but not limited xanthan gum and alginate and the like.

Various methods to detect changes to the starch (such as, amylose extraction, alpha-amylase digestion, and DSC) are described in Appendix A of U.S. provisional application no. 62/193,665 ("the '665 provisional"), which is incorporated herein by reference, and discussed in more detail below.

The speed and the extent of enzymatic digestion of a starch depends upon the integrity of the granule as it swells and/or breaks down when it is subjected to heat, in particular a moist heat. Three methods are used to assess the condition of starch granule as it is subjected to moist heat, and these methods are complimentary to one another. These methods include (1) amylose extraction and iodine binding, (2) alpha-amylase digestion (also known as the starch damage test), and (3) the differential scanning calorimetry ("DSC") test. When subjecting the fruit fillers to the heat treatment conditions, the starch granules will begin to soften and swell. This allows the starch to leach out of the granules and the digestion enzymes to diffuse into the granule. Each method can assess the extent of granule disruption which would relate to in vivo digestibility.

Method no. 1 uses iodine binding to measures how much amylose comes out of a starch granule during heating. The process involves the suspension and/or extraction of solids in 0.1 N of NaOH at room temperature. This method can illuminate changes that occur to the starch granule porosity, and the mobility of the lower molecular weight of starch out of the granule. That is, the greater the increase in granule porosity, the more starch will be available.

Method no. 2 involves measuring the amylase digestible starch that is made accessible to enzymes as a result of physical damage to the starch granule when subjected to various treatments, such as milling, heat moisture, and the like. The technique uses an enzyme to digest the starch and measures the resulting amount of free glucose. In this technique, the more the granule swells, they more of the enzyme can get into the granule. This method is commonly identified as AACC (American Association of Cereal Chemists) method 76-31.01.

Method no. 3, or DSC, involves measuring the heat capacity of the starch granule as a percent of gelatinization. This method measures the "as is" DSC gelatinization profile indicated by the onset temperature of the softening and the swelling of the amorphous starch in the filler, followed by melting of the starch crystallites without added moisture. In this method, water is added to the filler (e.g., about 1 part filler to 1 part water) to provide excess water needed to fully gelatinize the starch in the filler. When compared to untreated filler, this technique can measure the percent of starch gelatinized during moist heat treatment.

The gelatinization onset temperature measured by DSC measures the change in heat capacity of the amorphous regions of the starch as they soften and become rubbery. Subsequently, the starch crystallites melt and complete the disruption of the starch granule. As the granule softens, the digestive enzymes are able to access the starch and begin digestion. Increasing the sugar concentration can increase gelatinization onset temperature, however, it has been discovered (as will be discussed in the examples below), that moisture is an important driver of gelatinization onset temperature and digestibility. For example, as shown in the table below, the use of a 5% aqueous sodium carbonate solvent as an extraction solvent for moist heat treated starch solubilized too much starch, and the control level was too high to distinguish among the various moist heat treatment conditions.

| Filler Type | %moist ca | % starch d | % sugars, | Gel Onset Temp | Alkaline Extractable Starch | %starch as Glucose | % gel (DSC) |
|---|---|---|---|---|---|---|---|
| Filler | 10.71% | 51.01% | 31.68% | 112.1 | 3.81% | 7.09% | 0.00% |
| HFCS | 13.75% | 52.69% | 43.13% | 98.3 | 4.00% | 0.00% | 0.00% |
| Sucrose | 22.15% | 56.52% | 38.09% | 88.2 | 0.00% | 15.90% | 40.00% |
| Puree | 28.81% | 82.24% | 17.79% | 92.7 | 4.65% | 5.63% | 66.00% |
| Water* heat 63C | 56.00% | 100.00% | 0.00% | 61.2 | 24.00% | 36.00% | 43.00% |

The amount of starch that gelatinizes in fruit fillers is correlated with the amount of water in the filler. The in vitro digestibility of the starch in the fruit filler also correlates with the amount of moisture in the filler. Water without sugars and 63C heating instead of 90C produced a different degree of gelation, confirming that the gelation and moisture relationship identified is unique to the sugars concentration and amount of heat used.

A better understanding of the present disclosure and its many advantages may be clarified with the following examples. Unless noted otherwise, all percentages, ratios, and parts noted in this disclosure are by weight.

EXAMPLES

EXAMPLE 1

FIG. 1 illustrates a relationship of starch antiplasticizer molecular weight, antiplasticizer concentrate expressed as an antiplasticizer /water ratio and the resultant gelatinization temperature of wheat starch (Aytex P, ADM) in excess solution (i.e., starch solids about 50%, 1part starch to 1 part sugar-water cosolvent) in excess solution (i.e., starch solids greater than or equal to 50%). In this Example, the starch plasticizer was added water, and the starch anti-plasticizer were the sugars of fructose, glucose, sucrose, and polydextrose. In this Figure, two ratios of antiplasticizer to water are illustrated: AP/W = 1 and AP/W = 1.8 to 2.0. As shown by this chart, the gelatinization temperature increases as the molecular weight and concentration of the sugar increases indicating the anti-plasticizing function of sugars as they increase in molecular weight and water is displaced by increasing concentrations of sugar. The relationship is quasilinear with best fit as a second order polynomial. In general, increasing the S/W ratio from 1 to 2 tends to increase starch gelatinization temperatures by about 10° C and increasing molecular weight from about 180 to about 380 increases gelatinization temperature by about 10° C to about 15° C. Starch gelatinization temperature was measured as described previously.

Data Table for Figure 1: List of Antiplasticizers (AP), Molecular Weight, AP/P Concentration Ratio, and Gelatinization Temperature of Wheat Starch (Aytex P, ADM)

| Polyol | MW | AP/P | Gel tmp | Comments |
|---|---|---|---|---|
| flour/H2O | 1 | 0 | 63 | Gel temp, AP/P = 1.0 |
| glucose | 180.2 | 1 | 83 | Starch gel in sugar solutions (Bean, Cereal Chem 55(6):945-952) |
| Xylitol | 152.2 | | 81 | |
| Lactitol | 344.3 | 1 | 94.4 | |
| Sorbitol | 182.2 | 1 | 84.3 | |
| Maltitol | 344.3 | 1 | 93.2 | |
| PDX | 458 | 1 | 100.4 | Polydextrose(CAS No. 68424-04-4); |
| Sucrose | 342.3 | 1 | 92.5 | |
| Sucrose | 342.3 | 2.13 | 105 | Gel tmp, SP/P=1.8 - 2.0 |
| PDX | 458 | 1.73 | 113 | |
| Xylitol | | 1 | 81 | |
| Sorbitol | 18.2 | 1.95 | 99.8 | |
| flour/H2O | 1 | 0 | 63 | |
| Glucose | 180.2 | 2 | 94 | Starch gel in sugar solutions (Bean, Cereal Chem 55(6):945-952) |

As shown above, and in the chart of Figure 1, as the antiplasticizer concentration increases relative to the plasticizer, the gel temperature increases. And as the molecular weight of the antiplasticizer increases so the gelatinization temperature also increases.

EXAMPLE 2

FIG. 2 illustrates the effect of SDS retention based on the filler moisture content and the percentage of the starch anti-plasticizer in the filler. For these experiments, the starch was wheat starch (Aytex P, ADM), the starch plasticizer was water and/or glycerin, and the starch anti-plasticizer was a combination of fructose, glucose, and sucrose with 60% of the antiplasticizer of molecular weight 180 and 40% molecular weight 342 ranging down to 33% antiplasticizer molecular weight of 180 and 67% of molecular weight 342.

| Base Apple filler | | | | | |
|---|---|---|---|---|---|
| Ingredients | **Weight** | total wt | "as is" % composition | moist | DWT |
| Target dough temp- 67F | | | | | |
| Filler sugar- glucose | **10.7** | | 10.7% | | |
| Filler sugar- fructose | **10.9** | | 10.9% | | |
| Filler sugar- sucrose | **13.7** | | 13.7% | | |
| water | | | 11.4% | | |
| other (pectin, etc) | | | 7.7% | | |
| Total filler | | 54.35 | | 21.00% | 42.9 |

The above Table includes Sugars composition of the "Apple Filler" ingredient used to make SDS Fruit Fillers in the Table below... shown here is the sugar type, % composition, sugar g/100g apple filler ingredient and moisture content of the apple filler ingredient.

Below table has composition of SDS Fillers, including apple filler ingredient, wheat starch, water, sugar (liquid and dry), glycerin, total filler moisture, SDS content before and after heating to 90C, SDS content normalized to 36% wt/wt, % SDS retention after heating, total sugars and % sugar type.

| Run number | Temp (°C) | Apple filler nofib (%) | AytexP (%) | water (%) | liq Sugar (%) | sucrose (%) | Glycerine (%) | Karl Fischer Moisture Avg (%) | SDS, 90 C | SDS, RT | SDS Normalized for 36% starch content | %SDS Retention | Total Sugars (as is) | % Glucose | % Fructose | % Sucrose |
|---|---|---|---|---|---|---|---|---|---|---|---|---|---|---|---|---|
| 3 | 90 | 54.35 | 38.04 | 0.00 | 2.72 | 0.00 | 4.89 | 11.37 | 16.70 | | 16.70 | 98% | 39% | 11% | 11% | 16% |
| 4 | 90 | 34.60 | 34.60 | 0.00 | 27.68 | 0.00 | 3.11 | 15.76 | 13.55 | | 13.55 | 80% | 42% | 7% | 7% | 28% |
| 6 | 90 | 54.35 | 38.04 | 0.00 | 2.72 | 0.00 | 4.89 | 11.21 | 16.20 | | 16.20 | 95% | 39% | 11% | 11% | 16% |
| 7 | 90 | 58.74% | 38.18% | 0.00% | 0.00% | 0.00% | 3.08% | 10.88 | 17.90 | | 17.90 | 103% | 40% | | | |
| 13 from 2013 | 90 | 40.34 | 27.04 | 2.7 | 29.87 | 0 | 0 | 19.5 | | 7.50 | 9.99 | 57% | 49% | 8% | 8% | 33% |
| A* | 90 | 28.99 | 28.99 | 4.35 | 37.68 | 0.00 | 0.00 | 19.08 | 17.70 | 21.98 | | | 45% | | | |
| E | 90 | 33.00 | 39.60 | 3.30 | 21.78 | 0.00 | 2.31 | 16.84 | 17.00 | | 15.45 | 97.14% 37% | | 7% | 7% | 23% |
| F | 90 | 13.4 | 36.33 | 7.77 | 20.11 | 20.38 | 2.01 | 16.3 | 15.98 | | 15.83 | 99.09% | 43% | | | |
| G | 90 | 30.17 | 36.2 | 0 | 31.67 | 0 | 1.96 | | | | | | 42% | | | |
| 1 | RT | 54.35 | 38.10 | 0.00 | 2.72 | 0.00 | 4.89 | 11.71 | | 17.10 | 17.10 | | | 11.00% | 11.00% | 16.00% |
| 2 | RT | 34.60 | 34.60 | 0.00 | 27.68 | 0.00 | 3.11 | 16.19 | | 16.95 | 16.95 | | | 7.00% | 7.00% | 28.00% |
| 5 | RT | 54.36 | 38.00 | 0.00 | 2.72 | 0.00 | 4.81 | 11.87 87 | | 17.05 | 17.05 | | | 11.00% | 11.00% | 16.00% |
| 9 from 2013 | RT | 46.73 | 25.23 | 1.4 | 26.6 | 0 | 0 | 18.4 | | 12.2 | 17.41 | | | 8.00 | 8.00 | 33.00 |

As demonstrated in Figure 2, SDS retention increases as the amount of antiplasticizer increases for a given formula moisture. This map describes the different ways to get to a given SDS retention. For example, to retain 15gSDS/100g formulate with 10% moisture and 37% AP. Alternatively, higher sugars, 42% AP and higher (16%) moisture would also alllow a SDS of 15g/100g filler.

EXAMPLE 3

FIG. 3 illustrates retention of slowly digestible starch as gelatinization temperature of the starch, influenced by concentration of sugars and antiplasticizers, exceeds processing temperature of the filler, aiding in retention of high levels of SDS.

Baking temperature was approximately 90°C.

The table below shows the SDS fruit filler composition, including apple filler ingredient, wheat starch, water, sugar (liquid and dry), glycerin, total filler moisture, SDS content before and after heating to 90C, SDS content normalized to 36% wt/wt, % SDS retention after heating, total sugars and starch gelatinization temperature in the filler measured by DSC.

| Run number | Temp (°C) | Apple filler nofib (%) | AytexP (%) | water (%) | liq Suga (%) | sucrose (%) | Glycerine (%) | Karl Fischer Moisture Avg (%) | SDS, 90 C | SDS, RT | SDS Normalized for 36% starch content | %SDS Retention | Total Sugars (as is) | %SDS Retention | Starch Melt Point In Filler |
|---|---|---|---|---|---|---|---|---|---|---|---|---|---|---|---|
| 3 | 90 | 54.35 | 38.04 | 0.00 | 2.72 | 0.00 | 4.89 | 11.37 | 16.70 | | 16.70 | 98% | 39% | 98% | 125.96 |
| 4 | 90 | 34.60 | 34.60 | 0.00 | 27.68 | 0.00 | 3.11 | 15.76 | 13.55 | | 13.55 | 80% | 42% | 80% | 122.16 |
| 6 | 90 | 54.35 | 38.04 | 0.00 | 2.72 | 0.00 | 4.08 | 11.21 | 16.20 | | 16.20 | 95% | 39% | 95% | 125.96 |
| 7 | 90 | 58.74% | 38.18% | 0.00% | 0.00% | 0.00% | 3.08% | 10.88 | 17.90 | | 17.90 | 103% | 40% | 103% | 128.34 |
| 13 from 2013 | 90 | 40.34 | 27.04 | 2.7 | 29.87 | 0 | 0 | 19.5 | | 7.50 | 9.99 | 57% | 49% | 57% | 116.85 |

This demonstrates that a higher starch gelatinization temperature in the filler can stabilize the starch and increase the SDS retention.

**Claims**

1. A method of preparing a baked dough product including a bake-stable filling for retaining high levels of slowly digestible starch therein, the method comprising:

    blending a filling component, a non-gelatinized grain starch, a starch plasticizer, and a starch anti-plasticizer to form a filling having about 10 to about 24 percent moisture and a ratio of starch anti-plasticizer to starch plasticizer from about 0.25 to about 3.00 and a molecular weight of the starch anti-plasticizer from about 90 to about 3600;
    adding the filling to a raw dough component prior to baking to form a dough-filler composition;
    baking the dough-filler composition at temperatures no greater than about 10°C below the starch gelatinization temperature so that the grain starch remain unswelled to form a baked dough product including at least about 10 grams of slowly digestible starch per 100 grams of the filling component.

2. The method of claim 1, wherein the filling includes about 5 to about 60 percent of the anti-plasticizer.

3. The method of claim 1, wherein the filling component comprises a fruit component and wherein the filling includes about 1 to about 50 percent of the fruit component, about 10 to about 50 percent of the non-gelatinized grain starch; about 10 to about 25 percent of the starch plasticizer, and about 5 to about 60 percent of the starch anti-plasticizer.

4. The method of claim 3, wherein the fruit component is selected from the group consisting of juice, pomace, powder, paste, and dried fruit pieces.

5. The method of claim 1, wherein the non-gelatinized grain starch is selected from the group consisting of wheat, buckwheat, corn, rice, oat, millet, teff, rye, sorghum, barley, and mixtures thereof.

6. The method of claim 1, wherein the starch gelatinization temperature of the non-gelatinized grain starch is about 60°C to about 130°C.

7. The method of claim 1, wherein the dough-filler composition is baked at temperatures from about 10 to about 20°C below the starch gelatinization temperature in the filler.

8. The method of claim 1, wherein the filling has fat, and wherein the total fat of the filling no more than about 5 percent by weight.

9. A baked dough product including a bake-stable aqueous filling that retains high levels of slowly digestible starch therein after baking, the baked dough product comprising:

    a dough component;
    a filling applied to the dough component, the filling including a filling component, a non-gelatinized grain starch, a starch plasticizer, and a starch anti-plasticizer having a molecular weight from about 180 to about 3600, the filling having about 10 to about 25 percent moisture and a ratio of the starch anti-plasticizer to the starch plasticizer from about 0.25 to about 3.00; and
    at least about 10 grams of slowly digestible starch per about 100 grams of filling,
    wherein said baked dough product is obtainable by baking the dough-filling composition at a temperature no greater than about 10°C below the starch gelatinization temperature so that the grain starch remains unswelled to form a baked dough product including at least about 10 grams of slowly digestible starch per 100 grams of the filling component.

10. The product of claim 9, further comprising about 5 to about 60 percent of the anti-plasticizer.

11. The product of claim 9, wherein the filling component comprises a fruit component selected from the group consisting of juice, puree, powder, dried fruit, restructured fruit, concentrates, fruit fiber, fruit pomace and combinations thereof and wherein the filling includes about 5 to about 50 percent of the fruit component, about 10 to about 50 percent of the non-gelatinized grain starch; about 10 to about 25 percent of the starch plasticizer, and about 5 to about 60 percent of the starch anti-plasticizer.

12. The product of claim 9, wherein the starch gelatinization temperature of the non-gelatinized grain starch is about 60°C to about 130°C.

13. The product of claim 9, wherein the dough-filler composition is baked at temperatures from about 90 to about 150°C.

14. The product of claim 9, wherein the filling has fat, and wherein the total fat of the filling no more than about 5 percent by weight.

15. The product of claim 9, wherein the filling further includes one or more ingredients to provide bake stability selected from the group consisting of starch, pectin, fruit solids, and sugar solids.

16. The product of claim 9, wherein the filling is selected from the group consisting of fruit-based fillings, savory fillings, vegetable-based fillings, cheese-based fillings, and chocolate-based fillings.


**Patentansprüche**

1. Verfahren zur Herstellung eines gebackenen Teigprodukts einschließlich einer backstabilen Füllung zum Zurückhalten hoher Mengen langsam verdaulicher Stärke darin, wobei das Verfahren umfasst:

Mischen einer Füllkomponente, einer nicht gelatinierten Kornstärke, eines Stärke-Weichmachers und eines Stärke-Antiweichmachers, um eine Füllung mit ungefähr 10 bis ungefähr 24 Prozent Feuchtigkeit und einem Verhältnis von Stärke-Antiweichmacher zu Stärke-Weichmacher von ungefähr 0,25 bis ungefähr 3,00 zu bilden und mit einem Molekulargewicht des Stärke-Antiweichmachers von ungefähr 90 bis ungefähr 3600;
Hinzufügen der Füllung zu einer rohen Teigkomponente vor dem Backen, um eine Teigfüllstoff-Zusammensetzung zu bilden;
Backen der Teigfüllstoff-Zusammensetzung bei Temperaturen von nicht mehr als ungefähr 10 °C unter der Stärkegelatinierungstemperatur, sodass die Kornstärke unversehrt bleibt, um ein gebackenes Teigprodukt zu bilden, das mindestens ungefähr 10 g langsam verdauliche Stärke pro 100 g der Füllkomponente einschließt.

2. Verfahren nach Anspruch 1, wobei die Füllung zu ungefähr 5 bis ungefähr 60 Prozent Antiweichmacher einschließt.

3. Verfahren nach Anspruch 1, wobei die Füllkomponente eine Fruchtkomponente umfasst und wobei die Füllung ungefähr 1 bis ungefähr 50 Prozent der Fruchtkomponente, ungefähr 10 bis ungefähr 50 Prozent der nicht gelatinierten Kornstärke; ungefähr 10 bis ungefähr 25 Prozent des Stärke-Weichmachers und ungefähr 5 bis ungefähr 60 Prozent des Stärke-Antiweichmachers einschließt.

4. Verfahren nach Anspruch 3, wobei die Fruchtkomponente ausgewählt ist aus der Gruppe, bestehend aus Saft, Trester, Pulver, Paste und Trockenfruchtstücken.

5. Verfahren nach Anspruch 1, wobei die nicht gelatinierte Kornstärke ausgewählt ist aus der Gruppe, bestehend aus Weizen, Buchweizen, Mais, Reis, Hafer, Hirse, Teff, Roggen, Sorghum, Gerste und Mischungen davon.

6. Verfahren nach Anspruch 1, wobei die Stärkegelatinierungstemperatur der nicht gelatinierten Kornstärke ungefähr 60 °C bis ungefähr 130 °C beträgt.

7. Verfahren nach Anspruch 1, wobei die Teigfüllstoff-Zusammensetzung bei Temperaturen von ungefähr 10 bis ungefähr 20 °C unterhalb der Stärkegelatinierungstemperatur in dem Füllstoff gebacken wird.

8. Verfahren nach Anspruch 1, wobei die Füllung Fett aufweist und wobei das Gesamtfett der Füllung nicht mehr als ungefähr 5 Gewichtsprozent beträgt.

9. Gebackenes Teigprodukt einschließlich einer brennstabilen wässrigen Füllung, die nach dem Backen hohe Mengen an langsam verdaulicher Stärke darin zurückhält, wobei das gebackene Teigprodukt umfasst:

eine Teigkomponente;

eine Füllung, die auf die Teigkomponente aufgebracht wird, wobei die Füllung eine Füllungskomponente, eine nicht gelatinierte Kornstärke, einen Stärke-Weichmacher und einen Stärke-Antiweichmacher mit einem Molekulargewicht von ungefähr 180 bis ungefähr 3600 einschließt, wobei die Füllung ungefähr 10 bis ungefähr 25 Prozent Feuchtigkeit aufweist und ein Verhältnis zwischen dem Stärke-Antiweichmacher und dem Stärke-Weichmacher von ungefähr 0,25 bis ungefähr 3,00 beträgt; und

mindestens ungefähr 10 g langsam verdauliche Stärke pro ungefähr 100 g Füllung, wobei das gebackene Teigprodukt durch Backen der Teigfüllstoff-Zusammensetzung bei einer Temperatur von nicht mehr als ungefähr 10 °C unter der Stärkegelatinierungstemperatur erhalten werden kann, sodass die Kornstärke unversehrt bleibt, um ein gebackenes Teigprodukt zu bilden, das mindestens ungefähr 10 g langsam verdauliche Stärke pro 100 g der Füllkomponente einschließt.

10. Verfahren nach Anspruch 9, ferner umfassend ungefähr zu 5 bis ungefähr 60 Prozent den Antiweichmacher.

11. Produkt nach Anspruch 9, wobei die Füllkomponente eine Fruchtkomponente umfasst, die ausgewählt ist aus der Gruppe, bestehend aus Saft, Püree, Pulver, Trockenfrüchten, umstrukturierten Früchten, Konzentraten, Fruchtfaser, Fruchttrester und Kombinationen davon, und wobei die Füllung ungefähr 5 bis ungefähr 50 Prozent der Fruchtkomponente, ungefähr 10 bis ungefähr 50 Prozent der nicht gelatinierten Kornstärke; ungefähr 10 bis ungefähr 25 Prozent des Stärke-Weichmachers und ungefähr 5 bis ungefähr 60 Prozent des Stärke-Antiweichmachers einschließt.

12. Produkt nach Anspruch 9, wobei die Stärkegelatinierungstemperatur der nicht gelatinierten Kornstärke ungefähr 60 °C bis ungefähr 130 °C beträgt.

13. Produkt nach Anspruch 9, wobei die Teigfüllstoff-Zusammensetzung bei Temperaturen von ungefähr 90 bis ungefähr 150 °C gebacken wird.

14. Produkt nach Anspruch 9, wobei die Füllung Fett aufweist und wobei das Gesamtfett der Füllung nicht mehr als ungefähr 5 Gewichtsprozent beträgt.

15. Produkt nach Anspruch 9, wobei die Füllung ferner einen oder mehrere Bestandteile einschließt, um eine Backstabilität bereitzustellen, die ausgewählt ist aus der Gruppe, bestehend aus Stärke, Pektin, Fruchtfeststoffen und Zuckerfeststoffen.

16. Produkt nach Anspruch 9, wobei die Füllung ausgewählt ist aus der Gruppe, bestehend aus Füllungen auf Fruchtbasis, herzhaften Füllungen, Füllungen auf Gemüsebasis, Füllungen auf Käsebasis und Füllungen auf Schokoladenbasis.

**Revendications**

1. Procédé de préparation d'un produit de pâte cuit incluant un fourrage stable à la cuisson pour retenir des taux élevés d'amidon lentement digestible en son sein, le procédé comprenant :

le mélange d'un composant de fourrage, d'un amidon de céréales non gélatinisé, d'un plastifiant d'amidon, et d'un anti-plastifiant d'amidon pour former un fourrage ayant environ 10 à environ 24 pour cent d'humidité et un rapport d'anti-plastifiant d'amidon à plastifiant d'amidon d'environ 0,25 à environ 3,00 et une masse moléculaire de l'anti-plastifiant d'amidon d'environ 90 à environ 3600 ;
l'ajout du fourrage à un composant de pâte cru avant cuisson pour former une composition de fourrage de pâte ;
la cuisson de la composition de fourrage de pâte à des températures n'excédant pas environ 10 °C en dessous de la température de gélatinisation d'amidon de sorte que l'amidon de céréales reste non gonflé pour former un produit de pâte cuit incluant au moins environ 10 grammes d'amidon lentement digestible pour 100 grammes du composant de fourrage.

2. Procédé selon la revendication 1, dans lequel le fourrage inclut environ 5 à environ 60 pour cent de l'anti-plastifiant.

3. Procédé selon la revendication 1, dans lequel le composant de fourrage comprend un composant de fruit et dans lequel le fourrage inclut environ 1 à environ 50 pour cent du composant de fruit, environ 10 à environ 50 pour cent de l'amidon de céréales non gélatinisé ; environ 10 à environ 25 pour cent du plastifiant d'amidon, et environ 5 à environ 60 pour cent de l'anti-plastifiant d'amidon.

4.  Procédé selon la revendication 3, dans lequel le composant de fruit est choisi dans le groupe constitué de jus, marc, poudre, pâte, et morceaux de fruits séchés.

5.  Procédé selon la revendication 1, dans lequel l'amidon de céréales non gélatinisé est choisi dans le groupe constitué de blé, sarrasin, maïs, riz, avoine, millet, teff, seigle, sorgho, orge, et des mélanges de ceux-ci.

6.  Procédé selon la revendication 1, dans lequel la température de gélatinisation d'amidon de l'amidon de céréales non gélatinisé va d'environ 60 °C à environ 130 °C.

7.  Procédé selon la revendication 1, dans lequel la composition de fourrage de pâte est cuite à des températures d'environ 10 à environ 20 °C en dessous de la température de gélatinisation d'amidon dans le fourrage.

8.  Procédé selon la revendication 1, dans lequel le fourrage a de la matière grasse, et dans lequel la matière grasse totale du fourrage n'est pas plus d'environ 5 pour cent en poids.

9.  Produit de pâte cuit incluant un fourrage aqueux stable à la cuisson qui conserve des taux élevés d'amidon lentement digestible en son sein après cuisson, le produit de pâte cuit comprenant :

    un composant de pâte ;
    un fourrage appliqué au composant de pâte, le fourrage incluant un composant de fourrage, un amidon de céréales non gélatinisé, un plastifiant d'amidon, et un anti-plastifiant d'amidon ayant une masse moléculaire d'environ 180 à environ 3600, le fourrage ayant environ 10 à environ 25 pour cent d'humidité et un rapport de l'anti-plastifiant d'amidon au plastifiant d'amidon d'environ 0,25 à environ 3,00 ; et
    au moins environ 10 grammes d'amidon lentement digestible pour environ 100 grammes de fourrage, dans lequel ledit produit de pâte cuit peut être obtenu par cuisson de la composition de fourrage de pâte à une température n'excédant pas environ 10 °C en dessous de la température de gélatinisation d'amidon de sorte que l'amidon de céréales reste non gonflé pour former un produit de pâte cuit incluant au moins environ 10 grammes d'amidon lentement digestible pour 100 grammes du composant de fourrage.

10. Produit selon la revendication 9, comprenant en outre environ 5 à environ 60 pour cent de l'anti-plastifiant.

11. Produit selon la revendication 9, dans lequel le composant de fourrage comprend un composant de fruit choisi dans le groupe constitué de jus, purée, poudre, fruit séché, fruit restructuré, concentrés, fibre de fruit, marc de fruit et des combinaisons de ceux-ci et dans lequel le fourrage inclut environ 5 à environ 50 pour cent du composant de fruit, environ 10 à environ 50 pour cent de l'amidon de céréales non gélatinisé ; environ 10 à environ 25 pour cent du plastifiant d'amidon, et environ 5 à environ 60 pour cent de l'anti-plastifiant d'amidon.

12. Produit selon la revendication 9, dans lequel la température de gélatinisation d'amidon de l'amidon de céréales non gélatinisé va d'environ 60 °C à environ 130 °C.

13. Produit selon la revendication 9, dans lequel la composition de fourrage de pâte est cuite à des températures d'environ 90 à environ 150 °C.

14. Produit selon la revendication 9, dans lequel le fourrage a de la matière grasse, et dans lequel la matière grasse totale du fourrage n'est pas plus d'environ 5 pour cent en poids.

15. Produit selon la revendication 9, dans lequel le fourrage inclut en outre un ou plusieurs ingrédients pour fournir une stabilité à la cuisson, choisis dans le groupe constitué d'amidon, pectine, matières solides de fruit et matières solides de sucre.

16. Produit selon la revendication 9, dans lequel le fourrage est choisi dans le groupe constitué de fourrages à base de fruits, fourrages salés, fourrages à base de légumes, fourrages à base de fromage et fourrages à base de chocolat.

**Gel Temp:** Effect of Starch Anti-Plasticizer (AP) Molecular Weight at Two AP/P Ratios

$y = -0.0003x^2 + 0.2199x + 63.721$
$R^2 = 0.9707$

$y = -0.0001x^2 + 0.1251x + 63.605$
$R^2 = 0.9903$

AP = Anti-Plasticizer

P = Plasticizer

Gel tmp, S/W=1

Gel tmp, S/W=1.8 - 2.0

AP/P = 1.8 - 2.0

*Y-axis:* Starch Gel Temp, C

*X-axis:* Molecular Weight, Starch Anti-Plasticizer:

FIGURE 1

EP 3 324 745 B1

**FIGURE 2**

FIGURE 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090269446 A
- US 20140220186 A
- US 62193665

**Non-patent literature cited in the description**

- Water in Foods. Elsevier Science, 1994, 148
- Water in Foods. Elsevier Science, 1994, 162
- **ENGLYST KN ; ENGLYST HN ; HUDSON GJ ; COLE TJ ; JH CUMMINGS.** Rapidly available glucose in foods: an in vitro measurement that reflects the glycemic response. *Am J Clin Nutr,* 1999, vol. 69, 448-454
- **BEAN.** *Cereal Chem,* vol. 55 (6), 945-952
- *CHEMICAL ABSTRACTS,* 68424-04-4